# EUROPÄISCHE PATENTSCHRIFT

(11) **EP 1 826 438 B1**
(45) Veröffentlichungstag und Bekanntmachung des Hinweises auf die Patenterteilung: **17.10.2012**
(21) Anmeldenummer: 07002801.4
(22) Anmeldetag: 09.02.2007
(51) Int. Cl.: F16D 48/02

(54) **Öldruckversorgung für die Doppelkupplung eines Kraftfahrzeuges bzw. Doppelkupplungsgetriebe mit der zuvor genannten Öldruckversorgung**
Oil pressure feed for the double clutch of a motor vehicle or double clutch transmission with the aforementioned oil feed
Refoulement d'huile sous pression pour l'embrayage double d'un véhicule automobile ou engrenage à double embrayage doté du refoulement d'huile sous pression précédemment évoqué

(30) Priorität: 22.02.2006 DE 102006008243
(43) Veröffentlichungstag der Anmeldung: 29.08.2007
(73) Patentinhaber: Volkswagen Aktiengesellschaft, 38440 Wolfsburg (DE)
(72) Erfinder: Kappel, Reinhard, 38448 Wolfsburg (DE); Becker, Volker, 38518 Gifhorn (DE)

(56) Entgegenhaltungen:
- EP-A1- 0 519 387
- WO-A2-03/006839
- DE-A1- 4 415 664
- US-A1- 2005 067 251

## Beschreibung

Die Erfindung betrifft eine Doppelkupplung für ein Kraftfahrzeug, mit einer Öldruckversorgung für die beiden Kupplungen der Doppelkupplung eines Doppelkupplungsgetriebes, wobei für die erste Kupplung und für die zweite Kupplung eine gemeinsame Nabe zur Anordnung auf einer Eingangswelle des Doppelkupplungsgetriebes, vorgesehen ist, wobei für die Realisierung der Öldruckversorgung der ersten und zweiten Kupplung eine erste und zweite Ölzuführung vorgesehen ist, wobei die erste Ölzuführung als hydraulische Dreheinführung ausgebildet ist und die Nabe hierfür mindestens einen zum Druckraum der ersten Kupplung führenden - ersten - Naben-Ölmittelkanal aufweist. Weiterhin betrifft die Erfindung ein Doppelkupplungsgetriebe mit der zuvor genannten Öldruckversorgung.

Im Stand der Technik, von dem die Erfindung ausgeht, sind unterschiedliche Öldruckversorgungen für Getriebe bzw. für die Kupplungen von Getrieben bekannt. Bei der Doppelkupplung eines Doppelkupplungsgetriebes für ein Kraftfahrzeug ist es bisher im Stand der Technik üblich, dass für jede Kupplung, also für die erste und für die zweite Kupplung der Doppelkupplung jeweils eine separate Ölzuführung vorgesehen ist, die jeweils als hydraulische Dreheinführung ausgebildet ist. Im Allgemeinen ist jede der beiden Kupplungen antriebsseitig mit der Motorwelle, insbesondere der Kurbelwelle verbindbar bzw. verbunden und abtriebsseitig mit einer der beiden Eingangswellen des Doppelkupplungsgetriebes verbunden. Der Kupplungskorb bzw. einige Komponenten der beiden Kupplungen sind auf einer gemeinsamen Nabe angeordnet. Diese gemeinsame Nabe ist auf der außen liegenden Eingangswelle, insbesondere der Hohlwelle des Doppelkupplungsgetriebes radial außen angeordnet. Die beiden Ölzuführungen für die erste und für die zweite Kupplung sind hier jeweils als hydraulische Dreheinführungen ausgebildet. Dies bedeutet, dass die Nabe mindestens einen ersten Naben-Ölmittelkanal aufweist, der zum Druckraum der ersten Kupplung führt, aber auch einen zweiten Naben-Ölmittelkanal aufweist, der zum Druckraum der zweiten Kupplung führt. Vzw. sind jeweils zwei erste bzw. zwei zweite Naben-Ölmittelkanäle vorgesehen, die jeweils um 90° Grad zueinander versetzt angeordnet sind und zu den jeweiligen Druckräumen der ersten bzw. zweiten Kupplung führen, aber im wesentlichen im gleichen Bereich der Nabe angeordnet sind. Die Eingangsbereiche zu diesen Naben-Ölmittelkanälen liegen im wesentlichen an dem freien Ende der gemeinsamen Nabe und werden hier mit Drucköl bespeist. Die Eingangsbereiche der beiden Naben-Ölmittelkanäle sind dabei durch Dichtelemente entsprechend begrenzt, die in entsprechenden Nuten jeweils links- und rechtsseitig der Eingangsbereiche der beiden Naben-Ölmittelkanäle sitzen und radial durch eine Art Trennblech oder eine entsprechende Wandung begrenzt werden. Eine solche Lösung ist zum Beispiel in der US 2005/067251 A1 offenbart.

Aufgrund der ersten bzw. zweiten Naben-Ölmittelkanäle, die innerhalb der Nabe ausgebildet sind, muss die Nabe eine bestimmte Größe einerseits in radialer, andererseits aber auch in axialer Richtung aufweisen, damit diese beiden Naben-Ölmittelkanäle auch innerhalb der Nabe so ausgebildet werden können, dass ein Ölfluss zu den Druckräumen der ersten und zweiten Kupplung auch gewährleistet ist. Anders ausgedrückt, aufgrund der Ausbildung des ersten und zweiten Naben-Ölmittelkanales entsteht für eine derartige Doppelkupplung ein erhöhter Bauraumbedarf.

Aus der WO03/006839 A2 ist eine Ölzuführung für eine Doppelkupplung bekannt, wo das Öl zu den Druckräumen der Kupplungen durch Ringkanäle zwischen einer inneren Getriebeeingangswelle und einer radial innerhalb derselben verlaufenden Ölpumpenantriebswelle zugeführt ist. Die Ringkanäle sind durch eine Trennhülse voneinander getrennt. Die innere Getriebeeingangswelle ist dann noch durch eine zweite Getriebeeingangswelle umgegriffen. Solche Lösung fordert einen sehr großen axialen Bauraum und ist sehr aufwendig und kompliziert.

Der Erfindung liegt daher die Aufgabe zugrunde, die eingangs genannte Öldruckversorgung bzw. das eingangs genannte Doppelkupplungsgetriebe derart auszugestalten und weiterzubilden, dass der Bauraumbedarf entsprechend verringert ist, insbesondere in axialer Richtung verkürzt ist.

Die zuvor aufgezeigte Aufgabe ist nun für die Öldruckversorgung dadurch gelöst, dass für die zweite Ölzuführung für die zweite Kupplung mindestens ein Ölmittelkanal in einer Eingangswelle derart vorgesehen und/oder ausgebildet ist, so dass dieser Ölmittelkanal mit einem in der Nabe vorgesehenem zweiten Naben-Ölmittelkanal strömungstechnisch verbindbar ist, so dass die zweite Ölzuführung über den Ölmittelkanal der Eingangswelle und den zweiten Naben-Ölmittelkanal zum Druckraum der zweiten Kupplung realisiert ist. Für das Doppelkupplungsgetriebe ist die zuvor aufgezeigte Aufgabe dadurch gelöst, dass das Doppelkupplungsgetriebe mindestens eine Öldruckversorgung mit den zuvor genannten Merkmalen aufweist.

Dadurch, dass nunmehr die zweite Ölzuführung für die zweite Kupplung in anderer Weise ausgebildet ist als die erste Ölzuführung, nämlich die zweite Ölzuführung eben nicht mehr - wie bisher - als hydraulische Dreheinführung ausgebildet ist, kann die Ausbildung des zweiten Naben-Ölmittelkanales innerhalb der Nabe derartig verbessert werden, dass nun der Bauraumbedarf für die gesamte Nabe und damit auch für die gesamte Doppelkupplung verringert ist. Der zweite Naben-Ölmittelkanal kann nämlich nunmehr vzw. in einem ganz anderen Bereich innerhalb der Nabe ausgebildet werden, als der erste Naben-Ölmittelkanal, vzw. kann der zweite Naben-Ölmittelkanal nämlich in dem Bereich der Nabe ausgebildet werden, der dem Inneren der Doppelkupplung selbst näher zugewandt ist. Hierdurch bedingt kann zunächst die Dicke der Nabe verringert werden und zusätzlich auch die axiale Länge der Nabe verringert werden, wodurch der entsprechende Bauraumbedarf verringert ist. Vzw. wird also die zweite Ölzuführung auf andere Weise realisiert als die erste Ölzuführung, nämlich es ist ein separater Ölmittelkanal in einer Eingangswelle vorgesehen. Zur strömungstechnischen Verbindung des Ölmittelkanals mit dem zweiten Naben-Ölmittelkanal kann zwischen der ersten und zweiten Eingangswelle ein erster Ölzwischenraum ausgebildet sein, der über erste Dichtelemente begrenzt ist, die zwischen den beiden Eingangswellen angeordnet sind. Zwischen der ersten Eingangswelle und der Nabe kann ein zweiter Ölzwischenraum ausgebildet sein, der über zweite Dichtelemente begrenzt ist, die zwischen der ersten Eingangswelle und der Nabe angeordnet sind. Im Ergebnis sind die eingangs genannten Nachteile vermieden und entsprechende Vorteile erzielt.

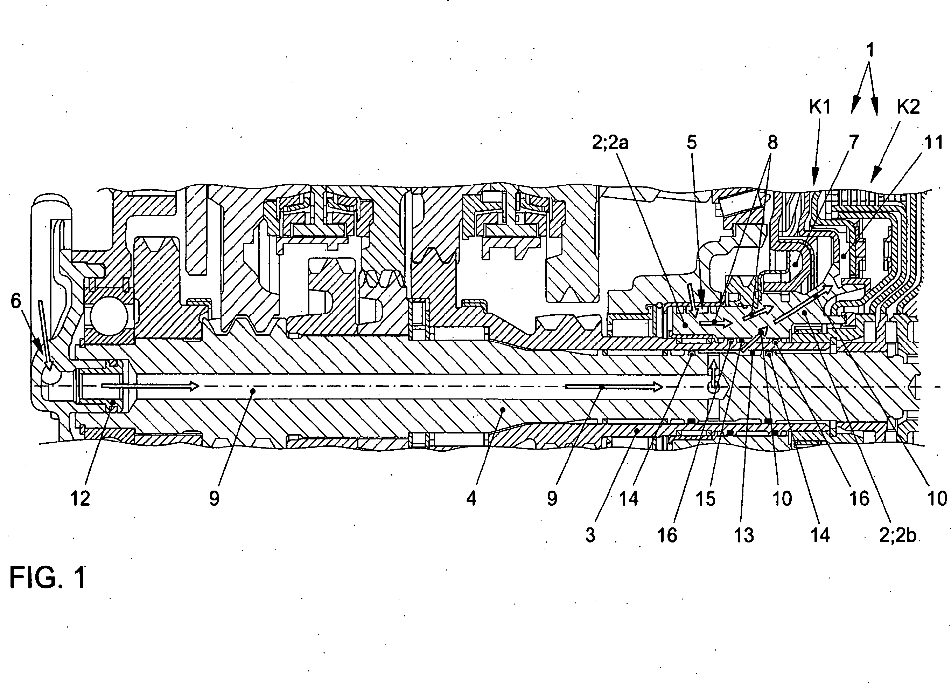

Es gibt nun eine Vielzahl von Möglichkeiten, die erfindungsgemäße Öldruckversorgung bzw. das erfindungsgemäße Doppelkupplungsgetriebe in vorteilhafter Art und Weise auszugestalten und weiterzubilden. Hierfür darf insbesondere auf die dem Patentanspruch 1 nachgeordneten Patentansprüche verwiesen werden. Im folgenden soll nun das bevorzugte Ausführungsbeispiel der Erfindung anhand der folgenden Zeichnung und der dazugehörenden Beschreibung näher erläutert werden. In der Zeichnung zeigt
- Fig. 1: in schematischer Darstellung die erste und zweite Ölzuführung zu den Druckräumen der jeweiligen Kupplung einer Doppelkupplung eines Doppelkupplungsgetriebes gemäß der Erfindung.

Die Fig. 1 zeigt eine Öldruckversorgung für die Doppelkupplung 1 eines hier nicht im einzelnen dargestellten Kraftfahrzeuges. Die hier dargestellte Öldruckversorgung ist für die beiden Kupplungen K1 und K2 der Doppelkupplung 1 des teilweise hier dargestellten Doppelkupplungsgetriebes vorgesehen. Für die erste Kupplung K1 und für die zweite Kupplung K2 ist eine gemeinsame Nabe 2 zur Anordnung auf einer Eingangswelle 3 des Getriebes vorgesehen.

Das hier dargestellte Doppelkupplungsgetriebe weist eine erste Eingangswelle 3 und eine zweite Eingangswelle 4 auf. Hierbei ist die erste Eingangswelle 3 im wesentlichen als Hohlwelle und die zweite Eingangswelle 4 im wesentlichen als Vollwelle ausgebildet, letztere aber erfindungsgemäß ausgebildet, was im folgenden noch näher erläutert werden wird. Für die Realisierung der Öldruckversorgung der ersten und zweiten Kupplung K1 und K2 ist eine erste Ölzuführung 5 bzw. eine zweite Ölzuführung 6 vorgesehen. Hierbei ist die erste Ölzuführung 5 als hydraulische Dreheinführung ausgebildet, wobei die Nabe 2 hierfür mindestens einen zum Druckraum 7 der ersten Kupplung K1 führenden - ersten - Naben-Ölmittelkanal 8 aufweist, was hier nur schematisch durch die entsprechenden Pfeile dargestellt ist.

Die eingangs genannten Nachteile sind nun im wesentlichen dadurch vermieden, dass für die zweite Ölzuführung 6 und für die zweite Kupplung K2 mindestens ein Ölmittelkanal 9 in einer Eingangswelle, vzw. hier in der zweiten Eingangswelle 4 derart vorgesehen und/oder ausgebildet ist, so dass dieser Ölmittelkanal 9 mit einem in der Nabe 2 vorgesehenen zweiten Naben-Ölmittelkanal 10 strömungstechnisch verbindbar ist, so dass die zweite Ölzuführung 6 über den Ölmittelkanal 9 der Eingangswelle 4 und den zweiten Naben-Ölmittelkanal 10 zum Druckraum 11 der zweiten Kupplung K2 realisiert ist. Hierdurch sind die bereits oben beschriebenen Nachteile vermieden und entsprechende Vorteile erzielt. Dies darf im folgenden noch ausführlicher erläutert werden:

Die zweite Ölzuführung 6 für die zweite Kupplung K2 ist nun auf andere Art und Weise ausgebildet, als die erste Ölzuführung 5 für die erste Kupplung K1. Die zweite Ölzuführung 6 weist nämlich einen Ölmittelkanal 9 auf, der im wesentlichen grundsätzlich vzw. in der zweiten Eingangswelle 4 ausgebildet ist. Die zweite Eingangswelle 4 ist daher im wesentlichen, aber nicht im gesamten als Vollwelle ausgebildet, da sie den Ölmittelkanal 9 aufweist.

Wie die Fig. 1 zeigt, ist die Nabe 2 der Doppelkupplung 1 auf der ersten Eingangswelle 3 des Doppelkupplungsgetriebes angeordnet, wobei die erste Eingangswelle 3 als Hohlwelle und die zweite Eingangswelle 4 zwar im wesentlichen als Vollwelle ausgebildet ist, allerdings den Ölmittelkanal 9 aufweist. Der Ölmittelkanal 9 ist nun in der zweiten Eingangswelle 4 im wesentlichen axial verlaufend ausgebildet. Der Öleintritt in den Ölmittelkanal 9 ist am Ende der zweiten Eingangswelle 4 mit Hilfe eines Lagerelementes 12 realisiert. Anders ausgedrückt, der Ölfluss geht also zunächst über das hier dargestellte linke Ende der zweiten Eingangswelle 4 über die axiale Länge der zweiten Eingangswelle 4, nämlich über den Ölmittelkanal 9.

Zur strömungstechnischen Verbindung des Ölmittelkanals 9 mit dem zweiten Naben-Ölmittelkanal 10, der hier ebenfalls nur schematisch durch die entsprechenden Pfeile dargestellt ist, ist nun zwischen der ersten und zweiten Eingangswelle 3 und 4 ein erster Ölzwischenraum 13 ausgebildet. Der erste Ölzwischenraum 13 ist über erste Dichtelemente 14 entsprechend begrenzt, die zwischen den beiden Eingangswellen 3 und 4 angeordnet sind.

Damit nun ein Ölfluss über den Ölmittelkanal 9 zum zweiten Naben-Ölmittelkanal 10 realisiert ist, ist zur strömungstechnischen Verbindung des Ölmittelkanals 9 mit dem zweiten - Naben-Ölmittelkanal 10 nun zwischen der ersten Eingangswelle 3 und der Nabe 2 ein zweiter Ölzwischenraum 15 ausgebildet. Dieser zweite Ölzwischenraum 15 ist über weitere zweite Dichtelemente 16 begrenzt, die wiederum zwischen der ersten Eingangswelle. 3 und der Nabe 2 angeordnet sind.

Die ersten und zweiten Dichtelemente 14 bzw. 16 sind in entsprechenden Nuten der ersten und zweiten Eingangswelle 3 und 4 angeordnet bzw. vorgesehen. Der erste und der zweite Ölzwischenraum 13 und 15 ist nun über mindestens eine in der ersten Eingangswelle 3 ausgebildete Durchtrittsöffnung und/oder einen hier ausgebildeten Durchtrittskanal miteinander strömungsverbunden. Dies ist abhängig vom jeweiligen Anwendungsfall bzw. der Dimensionierung der entsprechenden Ölzwischenräume 13 und 15. Es können auch mehrere Durchtrittsöffnungen oder mehrere hier nicht näher bezeichnete Durchtrittskanäle vorgesehen sein.

Vzw. sind nun zwei erste und zwei zweite Naben-Ölmittelkanäle 8 und 10 vorgesehen, jedoch ist hier in der Fig. 1 nur jeweils ein erster Naben-Ölmittelkanal 8 und ein zweiter Naben-Ölmittelkanal 10 durch die entsprechenden Pfeile dargestellt. Die entsprechenden ersten Naben-Ölmittelkanäle 8 bzw. zweiten Naben-Ölmittelkanäle 10 sind vzw. um jeweils 90° Grad zueinander versetzt innerhalb der Nabe 2 ausgebildet bzw. angeordnet.

Aufgrund der hier dargestellten spezifischen Ausbildung, insbesondere der Ausbildung der zweiten Ölzuführung 6 kann nun der erste und zweite Naben-Ölmittelkanal 8 und 10 im wesentlichen in zwei voneinander unterschiedlichen Bereichen innerhalb der Nabe 2 ausgebildet werden. Dies ist in Fig. 1 gut ersichtlich, da hier der erste Naben-Ölmittelkanal 8 vzw. im linken Bereich 2a der Nabe 2 und der zweiten Naben-Ölmittelkanal 10 vzw. im rechten Bereich 2b der Nabe 2 ausgebildet ist. Hierdurch können die entsprechend oben beschriebenen Vorteile erzielt werden.

Das hier im einzelnen nicht in der Fig. 1 dargestellte Doppelkupplurigsgetriebe, weist dann die zuvor beschriebene Öldruckversorgung auf, wobei aufgrund des verringerten Bauraumbedarfs das Doppelkupplungsgetriebe in seiner axialen Richtung eine kürzere Länge als üblich aufweisen und kann so vzw. auch in entsprechender Bauweise in dem Motorraum eines Kraftfahrzeuges eingebaut werden kann. Dadurch, dass nun hier die zweite Ölzuführung 6 über den Ölmittelkanal 9 realisiert ist, kann das hier dargestellte Doppelkupplungsgetriebe auch mit weniger Komponenten hergestellt werden, so dass auch geringere Kosten entstehen.

Die Bezeichnungen für die erste und zweite Kupplung K1 bzw. K2 sowie für den ersten und zweiten Naben-Ölmittelkanal 8 bzw. 10 sind hier anhand der Fig. 1 vzw. getroffen worden. Die entsprechenden Kupplungen bzw. Kanäle können auch in umgekehrter Reihenfolge bezeichnet werden: Gleiches gilt für die Bezeichnung der entsprechenden Antriebswellen 3 und 4.

Andere Komponenten, insbesondere Öldruckpumpen oder Steuerungskomponenten sind zur Vereinfachung hier nicht dargestellt worden. Diese sind jedoch vorhanden, um die entsprechende Steuerung, insbesondere den Ölfluss zu den Druckräumen 7 und 11 der jeweiligen Kupplungen K1 und K2 zu realisieren. Vzw. wird auch eine Ölentlastung über den gleichen Strömungsweg realisiert wie die Beaufschlagung der Druckräume 7 und 11 mit Drucköl. Hierzu werden die entsprechenden Kanäle und damit auch die Druckräume 7 und 11 entsprechend entlastet und die Komponenten der jeweiligen Kupplung K1 und K2 über ein Federsystem wieder in ihre entgegengesetzte Lage verbracht.

Im Ergebnis werden mit der erfindungsgemäßen Öldruckversorgung bzw. dem erfindungsgemäßen Doppelkupplungsgetriebe entscheidende Vorteile erzielt und die eingangs beschriebenen Nachteile vermieden.

### Bezugszeichenliste

- 1.: Doppelkupplung
- 2: Nabe
- 2a: linker Bereich
- 2b: rechter Bereich
- 3: erste Eingangswelle
- 4: zweite Eingangswelle
- 5: erste Ölzuführung
- 6: zweite Ölzuführung
- 7: Druckraum erste Kupplung
- 8: erster Naben-Ölmittelkanal
- 9: Ölmittelkanal
- 10: zweiter Naben-Ölmittelkanal
- 11: Druckraum zweite Kupplung
- 12: Lagerelement
- 13: erster Ölzwischenraum
- 14: erste Dichtelemente
- 15: zweiter Ölzwischenraum
- 16: zweite Dichtelemente
- K1: erste Kupplung
- K2: zweite Kupplung

## Patentansprüche

1. Doppelkupplung (1) für ein Kraftfahrzeug, mit einer Öldruckversorgung für die beiden Kupplungen (K1, K2) der Doppelkupplung (1) eines Doppelkupplungsgetriebes, wobei für die erste Kupplung (K1) und für die zweite Kupplung (K2) eine gemeinsame Nabe (2) zur Anordnung auf einer Eingangswelle des Doppelkupplungsgetriebes vorgesehen ist, wobei für die Realisierung der Öldruckversorgung der ersten und zweiten Kupplung (K1, K2) eine erste und zweite Ölzuführung (5, 6) vorgesehen ist, wobei die erste Ölzuführung (5) als hydraulische Dreheinführung ausgebildet ist und die Nabe (2) hierfür mindestens einen zum Druckraum der ersten Kupplung (7) führenden -ersten - Naben-Ölmittelkanal (8) aufweist, wobei für die zweite Ölzuführung (6) für die zweite Kupplung (K2) mindestens ein Ölmittelkanal (9) in einer Eingangswelle (3, 4) derart vorgesehen und/oder ausgebildet ist, so dass dieser Ölmittelkanal (9) mit einem in der Nabe (2) vorgesehenen zweiten Naben-Ölmittelkanal (10) strömungstechnisch verbindbar ist, so dass die zweite Ölzuführung (6) über den Ölmittelkanal (9) der Eingangswelle und den zweiten Naben-Ölmittelkanal (10) zum Druckraum der zweiten Kupplung (11) realisiert ist, **dadurch gekennzeichnet, daß** zur strömungstechnischen Verbindung des Ölmittelkanals (9) mit dem zweiten Naben-Ölmittelkanal (10) zwischen der ersten und zweiten Eingangswelle (3, 4) ein erster Ölzwischenraum (13) ausgebildet ist, der über erste Dichtelemente (14) begrenzt ist, die zwischen den beiden Eingangswellen (3, 4) angeordnet sind und/oder zwischen der ersten Eingangswelle (3) und der Nabe (2) ein zweiter Ölzwischenraum (15) ausgebildet ist, der über zweite Dichtelemente (16) begrenzt ist, die zwischen der ersten Eingangswelle (3) und der Nabe (2) angeordnet sind.

2. Doppelkupplung (1) nach Anspruch 1, **dadurch gekennzeichnet, daß** die Nabe (2) der Doppelkupplung (1) auf der ersten Eingangswelle (3) eines Doppelkupplungsgetriebes angeordnet ist und dass die erste Eingangswelle (3) als Hohlwelle und die zweite Eingangswelle (4) im wesentlichen als Vollwelle ausgebildet ist.

3. Doppelkupplung (1) nach Anspruch 1 oder 2, **dadurch gekennzeichnet, daß** der Ölmittelkanal (9) in der zweiten Eingangswelle (4) im wesentlichen axial verlaufend ausgebildet ist.

4. Doppelkupplung (1) nach einem der vorstehenden Ansprüche, **dadurch gekennzeichnet, daß** der Öleintritt in den Ölmittelkanal (9) am Ende der zweiten Eingangswelle (4) mit Hilfe eines Lagerelementes (12) realisiert ist.

5. Doppelkupplung (1) nach einem der vorstehenden Ansprüche, mit dem ersten Ölzwischenraum (13) und dem zweiten Ölzwischenraum (15) **dadurch gekennzeichnet, daß** der erste und der zweite Ölzwischenraum (13, 15) über mindestens eine in der ersten Eingangswelle (3) ausgebildete Durchtrittsöffnung und/oder einen hier ausgebildeten Durchtrittskanal miteinander strömungsverbunden sind.

6. Doppelkupplung (1) nach einem der vorstehenden Ansprüche, **dadurch gekennzeichnet, daß** zwei erste und zwei zweite Naben-Ölmittelkanäle (8, 10) vorgesehen sind.

7. Doppelkupplung (1) nach einem der vorstehenden Ansprüche, **dadurch gekennzeichnet, daß** jeweils der erste Naben-Ölmittelkanal (8) zum zweiten Naben-Ölmittelkanal (10) um 90 Grad zueinander versetzt innerhalb der Nabe (2) ausgebildet ist bzw. sind.

8. Doppelkupplung (1) nach einem der vorstehenden Ansprüche, **dadurch gekennzeichnet, daß** der erste und zweite Naben-Ölmittelkanal (8, 10) im wesentlichen in zwei voneinander unterschiedlichen Bereichen (2a, 2b) innerhalb der Nabe (2) ausgebildet sind.

## Claims

1. Dual clutch (1) for a motor vehicle, having an oil pressure supply for the two clutches (K1, K2) of the dual clutch (1) of a dual clutch gearbox, a common hub (2) being provided for the first clutch (K1) and for the second clutch (K2) for arrangement on an input shaft of the dual clutch gearbox, a first and second oil feed (5, 6) being provided for the realization of the oil pressure supply of the first and second clutch (K1, K2), the first oil feed (5) being configured as a hydraulic rotary inlet and the hub (2) having, for this purpose, at least one (first) hub oil-medium channel (8) which leads to the pressure space of the first clutch (7), at least one oil-medium channel (9) being provided and/or configured in an input shaft (3, 4) for the second oil feed (6) for the second clutch (K2) in such a way that the said oil-medium channel (9) can be connected in flow terms to a second hub oil-medium channel (10) which is provided in the hub (2), with the result that the second oil feed (6) is realized via the oil-medium channel (9) of the input shaft and the second hub oil-medium channel (10) to the pressure space of the second clutch (11), **characterized in that**, for the flow connection of the oil-medium channel (9) to the second hub oil-medium channel (10), a first oil intermediate space (13) is formed between the first and second input shaft (3, 4), which first oil intermediate space (13) is delimited via first sealing elements (14) which are arranged between the two input shafts (3, 4), and/or a second oil intermediate space (15) is formed between the first input shaft (3) and the hub (2), which second oil intermediate space (15) is delimited via second sealing elements (16) which are arranged between the first input shaft (3) and the hub (2).

2. Dual clutch (1) according to Claim 1, **characterized in that** the hub (2) of the dual clutch (1) is arranged on the first input shaft (3) of a dual clutch gearbox, and **in that** the first input shaft (3) is configured as a hollow shaft and the second input shaft (4) is configured substantially as a solid shaft.

3. Dual clutch (1) according to Claim 1 or 2, **characterized in that** the oil-medium channel (9) in the second input shaft (4) is configured so as to extend substantially axially.

4. Dual clutch (1) according to one of the preceding claims, **characterized in that** the oil inlet into the oil-medium channel (9) is realized at the end of the second input shaft (4) with the aid of a bearing-element (12).

5. Dual clutch (1) according to one of the preceding claims, having the first oil intermediate space (13) and the second oil intermediate space (15), **characterized in that** the first and the second oil intermediate space (13, 15) are flow-connected to one another via at least one passage opening which is formed in the first input, shaft (3) and/or a passage channel which is formed here.

6. Dual clutch (1) according to one of the preceding claims, **characterized in that** two first and two second hub oil-medium channels (8, 10) are provided.

7. Dual clutch (1) according to one of the preceding claims, **characterized in that** in each case the first hub oil-medium channel (8) is configured within the hub (2) so as to be offset by 90 degrees with respect to the second hub oil-medium channel (10).

8. Dual clutch (1) according to one of the preceding claims, **characterized in that** the first and second hub oil-medium channel (8, 10) are configured substantially in two different regions (2a, 2b) within the hub (2).

## Revendications

1. Embrayage double (1) pour un véhicule automobile, avec un refoulement d'huile pour les deux embrayages (K1, K2) de l'embrayage double (1) d'une boîte de vitesses à double embrayage, dans lequel il est prévu pour le premier embrayage (K1) et pour le deuxième embrayage (K2) un moyeu commun (2) à disposer sur un arbre d'entrée de la boîte de vitesses à double embrayage, dans lequel il est prévu, pour la réalisation du refoulement d'huile du premier et du deuxième embrayages (K1, K2), une première et une deuxième arrivées d'huile (5, 6), dans lequel la première arrivée d'huile (5) est réalisée sous la forme d'une introduction rotative hydraulique et le moyeu (2) présente à cet effet au moins un - premier - canal central à huile du moyeu (8) conduisant à la chambre de pression du premier embrayage (7), dans lequel, pour la deuxième arrivée d'huile (6) pour le deuxième embrayage (K2), au moins un canal central à huile (9) est prévu et/ou réalisé dans un arbre d'entrée (3, 4) de telle manière que ce canal central à huile (9) puisse être raccordé en écoulement à un deuxième canal central à huile (10) prévu dans le moyeu (2) de telle manière que la deuxième arrivée d'huile (6) soit réalisée par le canal central à huile (9) de l'arbre d'entrée et par le deuxième canal central à huile du moyeu (10) vers la chambre de pression du deuxième embrayage (11), **caractérisé en ce que**, pour un raccordement en écoulement du canal central à huile (9) au deuxième canal central à huile du moyeu (10), une première chambre intermédiaire à huile (13) est formée entre le premier et le deuxième arbres d'entrée (3, 4), laquelle est limitée par des premiers éléments d'étanchéité (14) qui sont disposés entre les deux arbres d'entrée (3, 4) et/ou une deuxième chambre intermédiaire à huile (15) est formée entre le premier arbre d'entrée (3) et le moyeu (2), laquelle est limitée par des deuxièmes éléments d'étanchéité (16), qui sont disposés entre le premier arbre d'entrée (3) et le moyeu (2).

2. Embrayage double (1) selon la revendication 1, **caractérisé en ce que** le moyeu (2) de l'embrayage double (1) est disposé sur le premier arbre d'entrée (3) d'une boîte de vitesses à double embrayage et **en ce que** le premier arbre d'entrée (3) est constitué par un arbre creux et le deuxième arbre d'entrée (4) est constitué essentiellement par un arbre plein.

3. Embrayage double (1) selon la revendication 1 ou 2, **caractérisé en ce que** le canal central à huile (9) est réalisé en direction essentiellement axiale dans le deuxième arbre d'entrée (4).

4. Embrayage double (1) selon l'une quelconque des revendications précédentes, **caractérisé en ce que** l'entrée d'huile dans le canal central à huile (9) est réalisée à l'extrémité du deuxième arbre d'entrée (4) à l'aide d'un élément de palier (12).

5. Embrayage double (1) selon l'une quelconque des revendications précédentes, avec la première chambre intermédiaire à huile. (13) et la deuxième chambre intermédiaire à huile (15), **caractérisé en ce que** la première et la deuxième chambres intermédiaires à huile (13, 15) sont reliées en écoulement l'une à l'autre par au moins une ouverture de passage formée dans le premier arbre d'entrée (3) et/ou un canal de passage réalisé ici.

6. Embrayage double (1) selon l'une quelconque des revendications précédentes, **caractérisé en ce qu'**il est prévu deux premiers et deux deuxièmes canaux centraux à huile du moyeu (8, 10).

7. Embrayage double (1) selon l'une quelconque des revendications précédentes, **caractérisé en ce que** le premier canal central à huile du moyeu (8) par rapport au deuxième canal central à huile du moyeu (10) est ou sont chaque fois réalisé(s) avec un décalage de 90° l'un par rapport à l'autre à l'intérieur du moyeu (2).

8. Embrayage double (1) selon l'une quelconque des revendications précédentes, **caractérisé en ce que** le premier et le deuxième canaux centraux à huile du moyeu (8, 10) sont réalisés essentiellement dans deux régions différentes l'une de l'autre (2a, 2b) à l'intérieur du moyeu (2).
